# EUROPÄISCHE PATENTSCHRIFT

(11) **EP 1 119 700 B1**
(45) Veröffentlichungstag und Bekanntmachung des Hinweises auf die Patenterteilung: **17.12.2003**
(21) Anmeldenummer: 99948775.4
(22) Anmeldetag: 17.09.1999
(51) Int. Cl.: F02M 35/10

(54) **LUFTFÜHRUNGSSYSTEM, INSBESONDERE SAUGSYSTEM EINER VERBRENNUNGSKRAFTMASCHINE**
AIR-ROUTING SYSTEM, ESPECIALLY A SUCTION SYSTEM OF AN INTERNAL COMBUSTION ENGINE
SYSTEME D'ADMISSION D'AIR, NOTAMMENT SYSTEME D'ASPIRATION POUR MOTEUR A COMBUSTION

(30) Priorität: 08.10.1998 DE 19846281
(43) Veröffentlichungstag der Anmeldung: 01.08.2001
(73) Patentinhaber: Mann + Hummel GmbH, 71638 Ludwigsburg (DE)
(72) Erfinder: BAUMANN, Christof, D-71696 Möglingen (DE); BLOSSEY, Werner, D-71726 Benningen (DE); HIELSCHER, Hans-Peter, D-71711 Steinheim (DE); JESSBERGER, Thomas, D-71277 Rutesheim (DE); PIETROWSKI, Herbert, D-74385 Pleidelsheim (DE); REHMANN, Achim, D-75249 Kieselbronn (DE); SCHOLL, Hans-Peter, D-74395 Mundelsheim (DE)
(74) Vertreter: Voth, Gerhard, Dipl.-Ing.
(86) Internationale Anmeldenummer: EP9906894
(87) Internationale Veröffentlichungsnummer: WO00022293

(56) Entgegenhaltungen:
- EP-A- 0 664 390
- EP-A- 0 713 964
- US-A- 5 613 478

## Beschreibung

### Stand der Technik

Die Erfindung betrifft ein Luftführungssystem, insbesondere ein Saugsystem einer Verbrennungskraftmaschine, nach der Gattung des Patentanspruches 1. Außerdem betrifft die Erfindung ein Saugmodul, insbesondere ein Saugmodul einer Verbrennungskraftmaschine, nach der Gattung des Patentanspruches 5.

Luftführungssysteme zur Verwendung als Ansaugtrakt für Brennmaschinen sind z. B. aus der Patentschrift EP 0664390 bekannt. In dieser Schrift wird insbesondere die Zusammenfassung des Luftfiltergehäuses und des Saugrohres in einem Gußteil beschrieben. Auch können weitere Bauelemente wie z. B. ein Luftentöler für Kurbelgehäusegase in das so entstehende Saugmodul integriert werden. Diese Maßnahmen eignen sich besonders auch für die Gestaltung von Kunststoffsaugrohren, die in Mehrschalentechnik hergestellt sind.

Die steigenden Anforderungen an Motorleistung und Fahrkomfort führen jedoch zu immer engeren Platzverhältnissen im Motorraum, z. B. durch eine steigende Anzahl von Motorkomponenten. Daraus folgt, daß auch das Saugsystem für den Motor immer kompakter aufgebaut werden muß. Andererseits sind zur Erzeugung der geforderten akustischen Eigenschaften des Saugsystems bestimmte Mindestvolumina notwendig.

Bekannte Lösungen zeigen hinsichtlich der Verkleinerung des Bauraums Ansätze zur Bauteilintegration auf. Diese können jedoch weiter verbessert werden.

In der US 5,613,478 ist ein Luftführungssystem für eine Verbrennungskraftmaschine offenbart. Das Luftführungssystem verfügt über ein Luftfiltergehäuse, wobei in dem Luftfiltergehäuse ein Luftfilterelement derart eingebracht ist, dass eine Rohseite dichtend von einer Reinseite getrennt ist. Durch das Filterelement wird die Ansaugluft gereinigt. Die Rohseite verfügt über einen Rohlufteinlass, durch welchen Luft in das Filtergehäuse gelangt. Die Reinseite ist über eine Zwischenleitung mit einem Kompressor verbunden, welcher zur Komprimierung der Ansaugluft vorgesehen ist. Von dem Kompressor geht eine Ladeluftleitung aus, welche mit der Verbrennungskraftmaschine verbunden ist. Die Ladeluftleitung verfügt über eine Umgehungsleitung, welche mit der Zwischenleitung verbunden ist. In der Umgehungsleitung ist ein Ventil vorgesehen, welches überschüssige komprimierte Reinluft der Zwischenleitung im unkomprimierten Reinluftbereich erneut zuführt.

Dieses bekannte Luftführungssystem hat jedoch den Nachteil, dass die luftführenden Bauteile viel Bauraum benötigen, welcher insbesondere bei Kraftfahrzeugen stets reduziert wird.

Aufgabe der Erfindung ist es, ein Lüftführungssystem insbesondere Saügsystem für Verbrennungskraftmaschinen zu schaffen, welches den zur Verfügung stehenden Bauraum optimal nutzt und dadurch ein zusätzliches Volumen schafft, welches zur Verbesserung-des Verhaltens des Saugsystems hinsichtlich seines Strömungsverhaltens und seiner Akustik dienen kann. Diese Aufgabe wird durch die Merkmale des Patentansprüchs 1 gelöst.

### Vorteile der Erfindung

Das erfindungsgemäße Luftführungssystem ist für insbesondere durch Kompressoren aufgeladene Motoren vorgesehen, die zur Kompensation des Kompressorüberdruckes im hohen Drehzahlbereich des Motors eine Luftumgehungsleitung aufweisen. Diese führt die überschüssige Verbrennungsluft der Reinluftleitung hinter dem Luftfilter vor dem Kompressor wieder zu. Erfindungsgemäß wird diese Leitung in die Unterschale des Saugmoduls integriert. Im Unterschied zu einer als alternativ in Frage kommenden Schlauchleitung mit rundem Querschnitt entsteht bei dieser Lösung kein Totraum. Damit wird der zur Verfügung stehende Einbauraum optimal genutzt. Weiterhin wird durch diese Maßnahme der Aufwand bei der Endmontage des Fahrzeugs deutlich verringert, da durch das Ersetzen des Schlauches durch den integrierten Kanal ein schwer handzuhabendes Bauteil wegfällt. Ein zusätzlicher Vorteil ist die Verringerung des Gesamtgewichtes des Saugsystems.

Eine besondere Ausführungsform der Umgehungsleitung sieht deren Anordnung um den Luftsammelraum herum vor. Dadurch wird zusätzlich zu der Bauteilintegration eine Funktionsintegration erreicht. Das Volumen der Umgehungsleitung wirkt bei dieser Bauform zusätzlich als Schallisolierung.

Eine weitere Modifikation der Umgehungsleitung sieht vor, daß der kompressorseitige Anschluß der Umgehungsleitung aus einem elastischen Formteil besteht. Dieses kann optimal an den zur Verfügung stehenden Bauraum angepaßt werden und erleichtert dadurch die Montage.

Eine weitere Ausgestaltung der Erfindung sieht in der Zwischenleitung zwischen Filter und Kompressor einen Resonanzraum vor, in den gleichzeitig die Umgehungsleitung mündet. Auch dies stellt eine Maßnahme zur Funktionsintegration dar. Die Luftzuführung kann gleichzeitig zur akustischen Optimierung des Ansauggehäuses genutzt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel der Erfindung wird nachfolgend anhand der Zeichnungen erläutert. Hierbei zeigen:
- Figur 1: eine Seitenansicht des Saugmoduls aus der Richtung des Zylinderkopfes und
- Figur 2: den Schnitt A-A gemäß Figur 1 durch das Saugmodul entlang eines der Saugrohre.

### Beschreibung der Ausführungsbeispiele

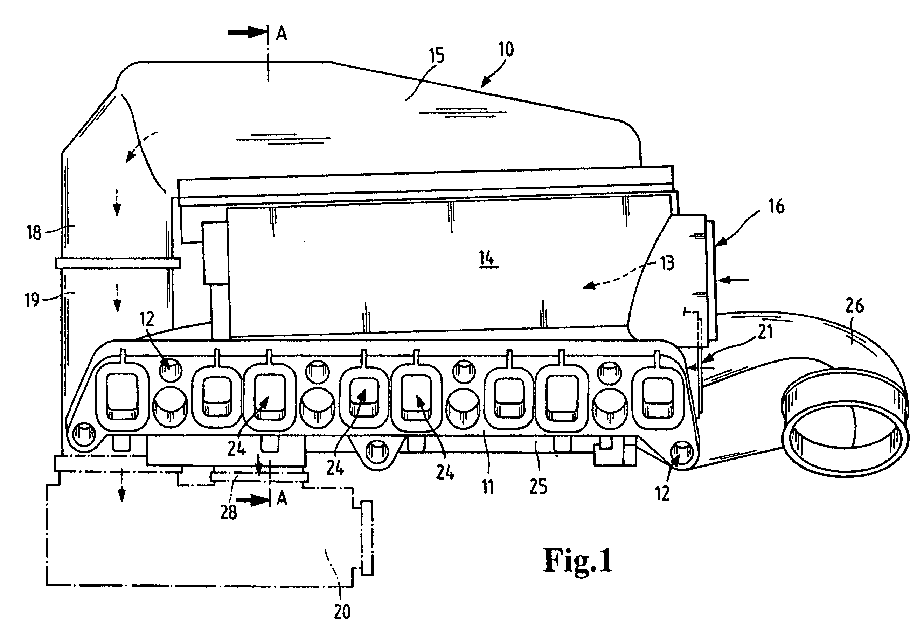

In Figur 1 ist ein Saugmodul 10 in der Seitenansicht dargestellt. Zur Befestigung des Saugmoduls dient ein Befestigungsflansch 11, der Bohrungen als Aufnahmen 12 für die Befestigung des Saugmoduls an einem nicht dargestellten Zylinderkopf durch Schrauben ermöglicht. Für die Montage des Saugmoduls muß daher schräg oberhalb des Befestigungsflansche 11 ein Freiraum 13 vorgesehen werden, damit die Befestigungsschrauben für Montagewerkzeuge zugänglich sind. Nach der Montage wird der Freiraum jedoch nicht mehr benötigt. Er stellt beim Betrieb des Fahrzeuges ein ungenutztes Volumen im Motorraum dar. Daher ist an dem Saugmodul 10 eine Haube 14 vorgesehen, die das Lufteinzugsvolumen eines Luftfiltergehäuses 15 vergrößert, indem sie den Freiraum 13 nutzt. Vor der Montage der Haube steht der Freiraum jedoch für die Montagewerkzeuge zur Verfügung. Die Haube kann nach Montage des Saugmoduls einfach aufgesteckt werden.

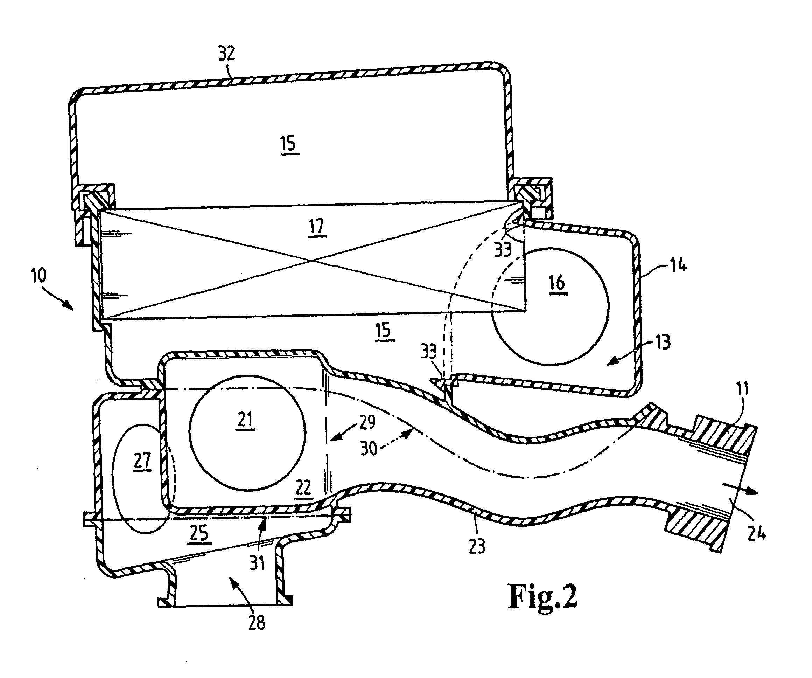

Der Weg der Ansaugluft durch das Saugmodul wird durch Betrachtung der Figuren 1 und 2 deutlich. Die Ansaugluft gelangt durch einen Rohlufteingang 16 in das System. Dieser ist in die Haube 14 integriert. Die Luft wird durch einen Filtereinsatz 17 gesogen und verläßt das Luftfiltergehäuse 15 durch einen Reinluftausgang 18, der in eine Zwischenleitung 19 mündet. Die Zwischenleitung mündet in einen Resonanzraum 20, der das Verbindungsglied zu einem nicht dargestellten Kompressor darstellt.

Die komprimierte Ansaugluft gelangt vom Kompressor kommend durch einen Reinlufteingang 21 in das Saugmodul. Der Reinlufteingang mündet in einen Sammelraum 22 von dem die einzelnen Saugrohre 23 abzweigen. Die Saugrohre enden in Saugrohrauslässen 24 im Befestigungsflansch 11, durch die die Ansaugluft das Saugmodul verläßt und in die Zylinder gelangt.

In höheren Drehzahlbereichen erzeugt der Kompressor einen zu hohen Ladedruck für die Ansaugluft. Dieser wird abgebaut, in dem die überschüssige komprimierte Luft über eine Umgehungsleitung 25 der Reinluft vor dem Kompressor wieder zu geführt wird. Die Umgehungsluft wird über ein Formteil 26 durch einen Umlufteingang 27 dem Saugmodul zugeführt. Die Luft strömt durch die Umgehungsleitung 25 und verläßt diese durch eine Zuführung 28, die in den Resonanzraum 20 führt. Hier vermischt sie sich mit der Reinluft aus dem Zwischenrohr 19 und kann erneut den Kompressor durchlaufen.

Der Sammelraum 22 grenzt nach oben hin an das Volumen des Filtergehäuses an. Nach unten und zur den Saugrohreingängen 29 abgewandten Seite ist der Sammelraum 22 von dem Volumen des Umgehungskanals 25 umgeben. Durch die Integration der Umgehungsleitung in das Saugmodul ergibt sich somit eine fast vollständige Kapselung des Luftsammlers. Dies hat positive Auswirkungen auf die akustischen Eigenschaften des Saugmoduls. Das Saugmodul besteht bevorzugt aus Kunststoff wobei der Grundkörper in Mehrschalentechnik hergestellt werden kann. Eine Trennfuge 30 verläuft durch den Sammelraum sowie die Saugrohre des Saugmoduls. Eine zusätzliche Trennfuge 31 ist in der Umgehungsleitung notwendig. Die Saugrohrschalen können z. B. durch das Vibrationsschweißverfahren miteinander verbunden werden. Das Filtergehäuse 15 weist außerdem einen Deckel 32 auf, der für den Einbau des Filtereinsatzes abgenommen werden kann. Die Haube 14 kann z. B. durch Schnappverbindungen 33 am Saugmodul befestigt werden.

## Patentansprüche

1. Luftführungssystem, insbesondere Saugsystem einer Verbrennungskraftmaschine, aufweisend
- einen Luftfilter zur Reinigung der Ansaugluft mit einem Reinluftausgang (18),
- eine Zwischenleitung (19), die mit dem Reinluftausgang (18) verbunden ist und einen Anschluß zu einem Kompressor aufweist,
- den Kompressor zur Komprimierung der Ansaugluft,
wobei ein Saugmodul (10), aufweisend
- einen Sammelraum (22) mit einem Reinlufteingang(21) für die komprimierte Ansaugluft,
- an den Sammelraum (22) angeschlossene Saugrohre (23),
- eine Umgehungsleitung (25) für überschüssige komprimierte Reinluft, die eine Zuführung (28) zu einem Kanalabschnitt des Saugmoduls für unkomprimierte Reinluft vor dem Kompressor aufweist,
im Luftführungssystem vorgesehen ist und wobei die Umgehungsleitung zumindest zum Teil in das Saugmodul (10) integriert ist, indem das Volumen der Umgehungsleitung (25) das Volumen des Sammelraumes (22) zumindest teilweise umgibt.

2. Luftführungssystem nach Anspruch 1 , **dadurch gekennzeichnet, daß** der kompressorseitige Anschluß der Umgehungsleitung (25) aus einem elastischen Formteil (26) besteht.

3. Luftführungssystem nach einem der vorherigen Ansprüche, **dadurch gekennzeichnet, daß** die Zwischenleitung (19) einen Resonanzraum (20) aufweist, in den die Zuführung (28) für die Umgehungsluft mündet.

## Claims

1. Air-circulating system, more especially an induction system for an internal combustion engine, said system including
- an air filter for cleaning the intake air, provided with a filtered air outlet (18),
- an intermediate line (19), which is connected to the filtered air outlet (18) and includes a connection to a compressor,
- the compressor for compressing the intake air,
wherein an intake module (10), which includes
- a collecting chamber (22), provided with a filtered air inlet (21) for the compressed intake air,
- suction pipes (23), which communicate with the storage chamber (22),
- a bypass line (25) for excess compressed filtered air, which line includes a supply means (28), leading to a duct portion of the suction module, for supplying non-compressed filtered air upstream of the compressor,
is provided in the air-circulating system, and wherein the bypass line is incorporated, at least partially, in the suction module (10), while the volume of the bypass line (25) surrounds, at least partially, the volume of the storage chamber (22).

2. Air-circulating system according to claim 1, **characterised in that** the connection of the bypass line (25) on the compressor side comprises a resilient shaped part (26).

3. Air-circulating system according to one of the previous claims, **characterised in that** the intermediate line (19) includes a resonance chamber (20), in which the supply means (28) for supplying the bypass air terminates.

## Revendications

1. Circuit de guidage d'air, en particulier circuit d'admission pour un moteur à combustion interne, comportant
- un filtre à air pour purifier l'air d'admission avec une sortie d'air pur (18),
- une conduite intermédiaire (19), qui est raccordée à la sortie d'air pur (18) et présente un raccordement vers un compresseur,
- le compresseur pour comprimer l'air d'admission,
- dans lequel il est prévu dans le circuit de guidage d'air un module d'aspiration (10) présentant
- une chambre collectrice (22) avec une entrée d'air pur (21) pour l'air d'admission comprimé,
- des tubulures d'admission (23) raccordées à la chambre collectrice (22),
- une conduite de dérivation (25) pour l'air pur comprimé en excès, qui présente un accès (28) à une portion de canal du module d'aspiration pour l'air pur non comprimé avant le compresseur,
dans lequel la conduite de dérivation est intégrée au moins en partie dans le module d'aspiration (10), du fait que le volume de la conduite de dérivation (25) entoure au moins en partie le volume de la chambre collectrice (22).

2. Circuit de guidage d'air selon la revendication 1,
**caractérisé en ce que**
le raccordement de la conduite de dérivation (25) du côté du compresseur est constitué d'une pièce façonnée élastique (26).

3. Circuit de guidage d'air selon l'une quelconque des revendications précédentes,
**caractérisé en ce que**
la conduite intermédiaire (19) présente une chambre de résonance (20), dans laquelle débouche l'accès (28) pour l'air dérivé.
